(19) Europäisches Patentamt
European Patent Office
Office européen des brevets

(11) Veröffentlichungsnummer: **0 045 855**
**A1**

(12) # EUROPÄISCHE PATENTANMELDUNG

(21) Anmeldenummer: **81105381.8**

(22) Anmeldetag: **10.07.81**

(51) Int. Cl.³: **C 08 F 10/02**
C 08 F 4/78, C 08 F 4/62

(30) Priorität: **08.08.80 DE 3030055**

(43) Veröffentlichungstag der Anmeldung:
**17.02.82 Patentblatt 82/7**

(84) Benannte Vertragsstaaten:
**BE DE FR GB IT**

(71) Anmelder: **BASF Aktiengesellschaft**
**Carl-Bosch-Strasse 38**
**D-6700 Ludwigshafen(DE)**

(72) Erfinder: **Stein, Dieter, Dr.**
**Woogstrasse 69**
**D-6703 Limburgerhof(DE)**

(72) Erfinder: **Bachl, Robert, Dr.**
**Parsevalstrasse 16**
**D-6520 Worms(DE)**

(72) Erfinder: **Richter, Konrad, Dr.**
**Amsterdamer Strasse 14**
**D-6700 Ludwigshafen(DE)**

(54) **Verfahren zum Herstellen von Ethylen-Homopolymerisaten sowie Ethylen-Copolymerisaten von alpha-Monoolefinen.**

(57) Verfahren zur Homo- und Co-Polymerisation von Äthylen mittels eines Trägerkatalysators (1), der auf einem anorganisch-oxidischen Trägerstoff (1.1) eine Chrom-Kohlenwasserstoff-Komplexverbindung (1.2) enthält. Charakteristisch für das erfindungsgemäße Verfahren ist, daß man (1) einen Trägerkatalysator einsetzt, der (1.1) auf einem speziellen anorganisch-oxidischen Trägerstoff (1.2) eine Chrom-Kohlenwasserstoff-Komplexverbindung der Formel RCrACrR - worin stehen R für einen 2n oder 2n + 1 Kohlenstoffatome sowie 1 bis n nicht-gehäufte Doppelbindungen - mit n von 2 bis 10 - aufweisenden Kohlenwasserstoff bzw. Kohlenwasserstoffrest ringförmiger und/oder offenkettiger Struktur, Cr für Chrom und A für Cyclooctatetraen, einen zweiwertigen n-Octatetraenrest oder deren Alkylgruppen als Substituenten tragende Homologe - enthält, sowie (2) - gegebenenfalls - einen Cokatalysator mit ein - setzt, der einer bestimmten Gruppe von Alkylaluminiumverbindungen angehört. Auf diese Weise sind Polymerisate mit einer besonders breiten Molekulargewichtsverteilung erhältlich.

EP 0 045 855 A1

Verfahren zum Herstellen von Ethylen-Homopolymerisaten sowie Ethylen-Copolymerisaten mit $\alpha$-Monoolefinen

Die vorliegende Erfindung liegt im Rahmen eines Verfahrens zum Herstellen von Ethylen-Homopolymerisaten sowie Ethylen-Copolymerisaten mit untergeordneten Mengen an einpolymerisierten $C_3$- bis $C_6$-$\alpha$-Monoolefinen durch Polymerisation des bzw. der Monomeren bei Temperaturen von 30 bis 200, insbesondere 50 bis 150°C und Drücken von 0,1 bis 200, insbesondere von 1 bis 60 bar, mittels eines Trägerkatalysators (1), der auf einem anorganisch-oxidischen Trägerstoff (1.1) eine Chrom-Kohlenwasserstoff-Komplexverbindung (1.2) enthält.

Verfahren dieser Art sind bekannt; - wofür mit der DE-AS 18 08 388 (= GB-PS 1 253 063) ein relevantes Zeugnis gegeben ist.

Diese Verfahren weisen gegenüber vergleichbaren Verfahren anderer Art einige Eigentümlichkeiten auf, durch welche sie - je nach dem gewünschten Effekt - zu einer mit Vorteilen verbundenen Alternative werden können. Als eine dieser Eigentümlichkeiten kann z.B. gelten, daß nicht nur die Regelbarkeit der Molekulargewichte der Verfahrensprodukte mittels Wasserstoff ausgeprägt gut ist, sondern auch bereits relativ geringe Mengen an Wasserstoff eine relativ starke Steigerung der Produktivität bewirken, - also der Ausbeute an Verfahrensprodukt pro Katalysatoreinheit.

Die Verfahren der in Rede stehenden Art vermögen zudem Polymerisate zu liefern, welche gegenüber Polymerisaten, die nach vergleichbaren Verfahren anderer Art erhältlich sind, die eine oder andere Besonderheit aufweisen und daher für das eine oder andere Anwendungsgebiet besonders

HWz/BL

geeignet sind. Hier sind z.B. Polymerisate zu nennen, die sich bevorzugt eignen zum Herstellen von Formkörpern nach dem Hohlkörperblasverfahren oder von Folien nach dem Folienblasverfahren.

Zur Verwendung im Rahmen der zuletzt genannten Verarbeitungsverfahren sind bekanntlich vor allem solche Polymerisate gesucht, die u.a. eine möglichst breite Molekulargewichtsverteilung haben.

Hier setzt die Aufgabe an, die zur vorliegenden Erfindung geführt hat: Im Rahmen der eingangs definierten Verfahrensart eine besondere Ausgestaltung aufzuzeigen, die es erlaubt, Polymerisate zu erhalten, die gegenüber Polymerisaten aus den bekannten Verfahren der in Rede stehenden Art ein verbessertes Eigenschaftsspektrum aufweisen mit dem Schwergewicht auf einer breiteren Molekulargewichtsverteilung.

Es wurde gefunden, daß die gestellte Aufgabe gelöst werden kann mittels eines Katalysators (1), der auf einem bestimmten Trägerstoff (1.1) eine Chrom-Kohlenwasserstoff-Komplexverbindung (1.2) einer besonderen Spezies enthält; - wobei es im allgemeinen zwar nicht erforderlich, aber von Vorteil ist, wenn dieser Katalysator zusammen mit einem bestimmten Cokatalysator (2) eingesetzt wird.

Gegenstand der vorliegenden Erfindung ist dementsprechend ein Verfahren zum Herstellen von Ethylen-Homopolymerisaten sowie Ethylen-Copolymerisaten mit untergeordneten Mengen an einpolymerisierten $C_3$- bis $C_6$-$\alpha$-Monoolefinen durch Polymerisation des bzw. der Monomeren bei Temperaturen von 30 bis 200, insbesondere 50 bis 150°C und Drücken von 0,1 bis 200, insbesondere von 1 bis 60 bar, mittels eines Trägerkatalysators (1), der auf einem anorganisch-

-oxidischen Trägerstoff (1.1) eine Chrom-Kohlenwasserstoff-Komplexverbindung (1.2) enthält. Das erfindungsgemäße Verfahren ist dadurch gekennzeichnet, daß man

(1) einen Trägerkatalysator einsetzt, der

(1.1) auf einem feinteiligen, porösen, anorganisch-oxidischen Trägerstoff, der einen Teilchendurchmesser von 1 bis 1.000, vorzugsweise 1 bis 400 µm, ein Porenvolumen von 0,3 bis 3, vorzugsweise 1 bis 2,5 $cm^3/g$ sowie eine Oberfläche von 100 bis 1.000, vorzugsweise 200 bis 700 $m^2/g$ besitzt und die Formel $SiO_2 \cdot aAl_2O_3$ - worin a steht für eine Zahl im Bereich von 0 bis 2, insbesondere 0 bis 0,5 - hat,

(1.2) eine Chrom-Kohlenwasserstoff-Komplexverbindung der Formel

RCrACrR,

worin stehen

R für einen 2n oder 2n + 1 Kohlenstoffatome sowie 1 bis n, vorzugsweise 2 bis n nicht-gehäufte - vorzugsweise ausschließlich olefinische - Doppelbindungen - worin n steht für eine ganze Zahl von 2 bis 10, vorzugsweise 2 bis 5 - aufweisenden Kohlenwasserstoff bzw. Kohlenwasserstoffrest ringförmiger und/oder offenkettiger Struktur,

Cr für Chrom und

A für Cyclooctatetraen oder einen zweiwertigen n-Octatetraenrest, wobei bis zu 8 Wasserstoffatome des Cyclooctatetraens bzw. n-Octatetraenrestes durch $C_1$- bis $C_4$-, insbesondere $C_1$- bis $C_2$-Alkylgruppen substituiert sein können,

enthält, sowie

(2) - gegebenenfalls und vorteilhafterweise - einen Cokatalysator mit einsetzt, der die Formel

$$X\text{-}Al\text{-}R' \\ \quad | \\ \quad Y$$

hat, worin stehen

X für Chlor, Wasserstoff, einen Rest R' oder einen Rest OR', vorzugsweise Wasserstoff, einen Rest R' oder einen Rest OR'

Y einen Rest R' oder einen Rest OR', vorzugsweise einen Rest R', und

R' für eine $C_1$- bis $C_{18}$-, vorzugsweise eine $C_1$- bis $C_{12}$- und insbesondere eine $C_2$- bis $C_6$-Alkylgruppe,

mit den Maßgaben, daß (i) der Trägerkatalysator (1) 0,01 bis 10, vorzugsweise 0,1 bis 8 Gew.-% - gerechnet als Chrom und bezogen auf den Trägerstoff (1.1) - Komplexverbindung (1.2) enthält und (ii) - im gegebenen Fall - das Atomverhältnis Chrom im Trägerkatalysator (1) : Aluminium im Cokatalysator (2) bis zu 1 : 1000, vorzugsweise 1 : 0,1 bis 1 : 200 und insbesondere 1 : 1 bis 1 : 100 beträgt.

Zu dem erfindungsgemäßen Verfahren ist im einzelnen das Folgende zu bemerken:

Das Polymerisationsverfahren als solches kann - unter Beachtung der kennzeichnenden Besonderheiten - in praktisch allen einschlägig üblichen technologischen Ausgestaltungen der Polymerisation von Olefinen nach Ziegler oder Phillips durchgeführt werden, etwa als diskontinuierliches, taktweises oder kontinuierliches Verfahren, sei

es z.B. als Suspensions-Polymerisationsverfahren, Lösungs-Polymerisationsverfahren oder Trockenphasen-Polymerisationsverfahren. Die erwähnten technologischen Ausgestaltungen sind aus der Literatur und Praxis wohlbekannt, so daß sich nähere Ausführungen zu ihnen erübrigen.

Es ist indes noch zu sagen, daß das Verfahren sich vornehmlich zum Herstellen von Homopolymerisaten des Ethylens eignet und daß im Falle des Herstellens von Copolymerisaten des Ethylens mit $C_3$- bis $C_6$-$\alpha$-Monoolefinen vor allem Propen, Buten-1, 4-Methylpenten-1 und Hexen-1 als $\alpha$-Monoolefine in Betracht kommen. Die Regelung der Molekulargewichte der Polymerisate kann in einschlägig üblicher Weise erfolgen, insbesondere mittels Wasserstoff als Regulans.

Zu dem neuen Trägerkatalysator (1) selbst ist das Folgende zu sagen:

Er enthält auf einem bestimmten Trägerstoff (1.1) eine Chrom-Kohlenwasserstoff-Komplexverbindung (1.2) einer besonderen Spezies.

Der Trägerstoff (1.1) seinerseits wird im allgemeinen ein Alumosilikat oder - insbesondere - ein Siliciumdioxid sein; wichtig ist, daß er die geforderten Parameter erfüllt. - Wie sich gezeigt hat, sind besonders gut geeignete Trägerstoffe solche, die gemäß der ersten Stufe (1) des in der GB-PS 1 550 951 beschriebenen Verfahrens erhalten werden, insbesondere dann, wenn dabei von Hydrogelen ausgegangen wird, wie sie nach den Vor-Stufen (A) bis (D) gemäß der gleichen PS anfallen; - d.h. von Hydrogelen, die nach dem in der GB-PS 1 368 711 beschriebenen Verfahren erhältlich sind. - Es hat sich ferner gezeigt, daß die Trägerstoffe möglichst frei sein sollten von adsorbierten

Verbindungen, die Hydroxylgruppen enthalten, wie Wasser oder Alkohole. Zur (i) Entfernung solcher Verbindungen (Trocknen") bzw. (ii) Beseitigung der Hydroxylgruppen ("Neutralisieren") kann man sich der einschlägig bekannten Methoden bedienen, wie (i) dem Trocknen des Trägerstoffs bei erhöhter Temperatur und/oder vermindertem Druck und/oder unter trockenem Spülgasstrom bzw. (ii) der Behandlung des Trägerstoffs mit einer Alkylaluminiumverbindung, etwa der gleichen chemischen Natur wie die im Rahmen der vorliegenden Erfindung gegebenenfalls mit einzusetzenden Cokatalysatoren (2), - wobei im übrigen sinngemäß so verfahren werden kann, wie es in der GB-PS 1 551 306, dort für Stufe (1.1), dargestellt ist. Wie sich ergeben hat, kann eine Kombination von (i) Trocknen und (ii) Neutralisieren zweckmäßig sein.

Die Chrom-Kohlenwasserstoff-Komplexverbindung (1.2) muß der angegebenen Formel entsprechen. Beispiele für Komplexverbindungen dieser Art sind solche, in deren Formel RCrACrR stehen:

R für Cyclododecatrien, Cyclooctatetraen, Cyclooctatrien, Cyclooctadien, Cycloheptatrien, Cycloheptadien, Cyclohexadien, Cyclopentadien, Butadien oder deren durch Substitution von Wasserstoffatomen durch $C_1$- bis $C_4$--Alkylgruppen charakterisierte Derivate bzw. die jeweiligen Kohlenwasserstoff-Reste, und

A für Cyclooctatetraen bzw. Octamethylcyclooctatetraen oder einen zweiwertigen n-Octatetraen- bzw. Octamethyl-n-octatetraenrest.

Wie sich gezeigt hat, sind für den erfindungsgemäßen Zweck besonders gut geeignet solche Komplexverbindungen, in deren Formel stehen:

R für Cyclooctatetraen, Cyclooctatrien, Cyclopentadien und Butadien oder deren durch Substitution von Wasserstoffatomen durch Methyl- bzw. Ethylgruppen charakterisierte Derivate bzw. die jeweiligen Kohlenwasserstoff-Reste, und

A für Cyclooctatetraen oder einen zweiwertigen n-Octatetraenrest.

Hiervon wiederum sind hervorzuheben solche, in deren Formel stehen:

R für Cyclooctatetraen, Butadien oder den einwertigen Cyclopentadienylrest, und

A für Cyclooctatetraen oder einen zweiwertigen n-Octatetraenrest.

Es versteht sich, daß für den erfindungsgemäßen Zweck die Komplexverbindungen (1.2) in Form von Einzelindividuen oder in Form von Gemischen aus zwei oder mehr Einzelindividuen eingesetzt werden können.

Die in Rede stehenden Komplexverbindungen gehören im übrigen einer an sich bekannten Spezies von Stoffen an, so daß sich an dieser Stelle eine Beschreibung ihrer Herstellweise erübrigt; letztere findet sich beispielsweise in der GB-PS 1 128 128 sowie der Dissertation "Tris(cyclopctatetraen)dichrom Eigenschaften und Reaktionen" von W.Geibel, Ruhr-Universität Bochum, 1977.

Das Herstellen des eigentlichen Trägerkatalysators (1), d.h. das Aufbringen der Chrom-Kohlenwasserstoff-Komplexverbindung (1.2) auf den Trägerstoff (1.1) kann in einschlägig üblicher Weise erfolgen. Wie sich gezeigt hat, ist es in diesem Rahmen im allgemeinen zweckmäßig, den Trägerstoff aus einer Lösung der Komplexverbindung heraus

- gegebenenfalls unter Abdampfen des Lösungsmittels - zu beladen, wobei als Lösungsmittel relativ leichtsiedende Kohlenwasserstoffe gesättigt-aliphatischer und/oder aromatischer Natur in Frage kommen, z.B. n-Pentan, n-Heptan, Toluol oder Benzol. Es ist in vielen Fällen aber mit gleichem Erfolg auch möglich, den Trägerstoff (1.1) durch Aufdampfen - insbesondere unter vermindertem Druck - der Komplexverbindung (1.2) mit dieser zu beladen.

Eingangs ist bereits dargelegt worden, daß Trägerkatalysatoren der erfindungsgemäßen Art eine besonders sensitive Regelung der Molekulargewichte der Polymerisate mittels Wasserstoff erlauben, und daß schon relativ geringe Mengen an Wasserstoff eine relativ starke Steigerung der Produktivität bewirken. Wie sich gezeigt hat, ist diese wünschenswerte Eigenschaft z.B. besonders stark ausgeprägt bei Trägerkatalysatoren auf der Basis von Chrom-Kohlenwasserstoff-Komplexverbindungen (1.2), in deren Formel stehen: R für den einwertigen Cyclopentadienylrest und A für einen zweiwertigen n-Octatetraenrest; Trägerkatalysatoren, denen als Komplexverbindungen solche zugrundeliegen, in deren Formel stehen: R für Cyclooctatetraen oder Butadien und A für Cyclooctatetraen, bringen diese Eigenschaft in nicht ganz so hohem Maße mit sich.

Es ist beim erfindungsgemäßen Verfahren nicht zwingend, aber von Vorteil, die Trägerkatalysatoren (1) zusammen mit Co-Katalysatoren (2) der angegebenen Formel einzusetzen. Letztere beeinflussen das Verfahren so, daß sich - jeweils ansonsten vergleichbare Bedingungen vorausgesetzt - eine Steigerung der Produktivität, bezogen auf den Trägerkatalysator (1), ergibt.

Die Co-Katalysatoren können - im Rahmen der gegebenen Formel - die auch bei der Polymerisation von Olefinen nach Ziegler oder Phillips eingesetzten aluminiumorganischen Verbindungen sein. Geeignet sind z.B. Verbindungen, die repräsentiert werden durch die Formeln $(C_2H_5)_3Al$, $(i\text{-}C_4H_9)_3Al$, $(C_2H_5)_2AlH$, $(C_2H_5)_2AlOC_2H_5$ oder $(C_2H_5)Al(OC_2H_5)_2$. Ebenso geeignet ist Isoprenylaluminium.

Es versteht sich, daß für den erfindungsgemäßen Zweck auch die Co-Katalysatoren (2) in Form von Einzelindividuen oder in Form von Gemischen bzw. Komplexen aus zwei oder mehr Einzelindividuen eingesetzt werden können.

Die nachfolgenden Beispiele sollen die Erfindung erläutern, ohne indes ihren Umfang zu beschränken.

Beispiel 1

Herstellen des Trägerkatalysators (1)

Es wird ausgegangen von einer Suspension aus 49,0 g Siliciumdioxid ($SiO_2$, Teilchendurchmesser 40 bis 300 µm, Porenvolumen 1,9 $cm^3/g$, Oberfläche 330 $m^2/g$), das 12 Stunden bei 600°C im Argonstrom getrocknet worden war, in 300 ml sauerstofffreiem Heptan. Diese Suspension wird mit einer Lösung von 5 g Diethylaluminiummethoxid in 125 g Heptan versetzt und 4 Stunden bei Raumtemperatur gerührt. Anschließend wird das feste Reaktionsprodukt durch Abtreiben des Heptans bei Raumtemperatur unter 5 mbar Druck isoliert. Im Anschluß werden 0,37 g einer Chrom-Kohlenwasserstoff-Komplexverbindung, in deren Formel stehen R sowie A für Cyclooctatetraen, in 250 ml Toluol zugefügt, 4 Stunden lang bei Raumtemperatur gerührt und das Toluol durch Evakuieren bei Raumtemperatur unter einem Druck von 5 mbar entfernt. Die Analyse des so erhaltenen hellbraunen Trä-

gerkatalysators ergibt 0,17 Gew.-% Chrom, bezogen auf den Trägerstoff.

Polymerisation

1,75 g des Trägerkatalysators (1) werden in einen Rührautoklaven gegeben, der mit 5 Litern, entsprechend etwa 50 % seines Fassungsvermögens, an Isobutan beschickt ist. Sodann wird unter Rühren und bei den - jeweils durch Regelung konstant gehaltenen - Parametern : Ethylendruck 25 bar, Temperatur 105°C, über eine Zeitspanne von 2 Stunden polymerisiert, wonach die Polymerisation durch Entspannen des Autoklaven abgebrochen wird.

Nähere Angaben zu dem Verfahrensprodukt finden sich in der unten stehenden Tabelle.

Beispiel 2

Herstellen des Trägerkatalysators (1)

Es erfolgt wie in Beispiel 1.

Polymerisation

1,2 g des Trägerkatalysators (1) sowie 0,04 g Triethylaluminium (2) (entsprechend einem Atomverhältnis Chrom im Trägerkatalysator zu Aluminium im Cokatalysator von 1:9), letzteres gelöst in 10 ml trockenem Heptan, werden nacheinander in einen Rührautoklaven gegeben, der mit 5 Litern, entsprechend etwa 50 % seines Fassungsvermögens, mit Isobutan beschickt ist. Im übrigen wird polymerisiert wie in Beispiel 1.

Nähere Angaben zu dem Verfahrensprodukt enthält die unten stehende Tabelle.

Beispiel 3

Herstellen des Trägerkatalysators (1)

Es erfolgt wie in Beispiel 1.

Polymerisation

1,22 g des Trägerkatalysators (1) sowie 3,0 g Triethylaluminium (2) (entsprechend einem Atomverhältnis Chrom im Trägerkatalysator zu Aluminium im Cokatalysator von 1:660), letzteres gelöst in 20 ml trockenem Heptan, werden nacheinander in einen Rührautoklaven gegeben, der mit 5 Litern, entsprechend etwa 50 % seines Fassungsvermögens, mit Isobutan beschickt ist. Sodann werden unter Rühren 5 bar Wasserstoff aufgepreßt. Die Polymerisation erfolgt bei 90°C unter einem Gesamtdruck von 45 bar, der durch ständiges Nachpressen von Ethylen aufrechterhalten wird. Nach 2 Stunden wird die Polymerisation durch Entspannen des Autoklaven abgebrochen.

Nähere Angaben zu dem hierbei erhaltenen Verfahrensprodukt sind ebenfalls der Tabelle zu entnehmen.

Beispiel 4

Herstellen des Trägerkatalysators (1)

Es wird ausgegangen von einer Suspension von 53,33 g Siliciumdioxid ($SiO_2$, Teilchendurchmesser 40 bis 150 µm, Porenvolumen 1,6 $cm^3/g$, Oberfläche 300 $m^2/g$), das 10 Stunden bei 500°C im Argonstrom getrocknet worden war, in 200 g

Toluol. Diese Suspension wird mit einer Lösung von 0,57 g einer Chrom-Kohlenwasserstoff-Komplexverbindung, in deren Formel stehen R sowie A für Cyclooctatetraen, in 200 g Toluol vereinigt. Man rührt die erhaltene Suspension 4 Stunden lang bei Raumtemperatur und isoliert die feste Phase durch Filtration und Trocknen bei Raumtemperatur unter einem Druck von 2 mbar. Der so erhaltene Trägerkatalysator besitzt einen Chromgehalt von 0,27 Gew.-%, bezogen auf den Trägerstoff.

Polymerisation

1,3 g des Trägerkatalysators (1) sowie 0,05 g Triethylaluminium (2) (entsprechend einem Atomverhältnis Chrom im Trägerkatalysator zu Aluminium im Cokatalysator von 1:6,5), letzteres gelöst in 10 Gew.-Teilen Heptan, werden nacheinander in einen Rührautoklaven gegeben, der mit 5 Litern, entsprechend ca. 50 % seines Fassungsvermögens, mit Isobutan beschickt ist. Sodann wird unter Rühren und bei den - jeweils durch Regelung konstant gehaltenen - Parametern: Ethylendruck 25 bar, Temperatur 70°C, über eine Zeitspanne von 2 Stunden polymerisiert, wonach die Polymerisation durch Entspannen des Autoklaven abgebrochen wird.

Nähere Angaben zum Verfahrensprodukt finden sich wiederum in der Tabelle.

<u>Beispiel 5</u>

Herstellen des Trägerkatalysators (1)

Es wird ausgegangen von einer Suspension aus 17,3 g Siliciumdioxid ($SiO_2$, Teilchendurchmesser 40 bis 300 µm, Porenvolumen 2,1 $cm^3/g$, Oberfläche 625 $m^2/g$), das 5 Stunden

bei 600°C im Argonstrom getrocknet worden war, in 200 g trockenem Heptan. Diese Suspension wird mit 0,6 g einer Chrom-Kohlenwasserstoff-Komplexverbindung, in deren Formel stehen R für den einwertigen Cyclopentadienylrest und A für einen zweiwertigen n-Octatetraenrest, versetzt und 2 Stunden unter Rühren auf einer Temperatur von 50°C gehalten, wonach der Feststoff abfiltriert und bei Raumtemperatur unter 5 mbar Druck getrocknet wird. Der so erhaltene Trägerkatalysator hat einen Chromgehalt von 1,06 Gew.--Prozent, bezogen auf den Trägerstoff.

Polymerisation

0,27 g des Trägerkatalysators (1) sowie 0,08 g Isoprenylaluminium (2) (entsprechend einem Atomverhältnis Chrom im Trägerkatalysator zu Aluminium im Cokatalysator von 1:8), letzteres gelöst in 10 Gew.-Teilen trockenem Heptan, werden nacheinander in einen Rührautoklaven gegeben, der mit 400 g, entsprechend ca. 50 % seines Fassungsvermögens, n-Heptan beschickt ist. Sodann werden unter Rühren 2 bar Wasserstoff aufgepreßt. Die Polymerisation erfolgt bei 95°C und einem Gesamtdruck von 35 bar, der durch ständiges Nachpressen von Ethylen aufrechterhalten wird. Nach 2 Stunden wird die Polymerisation durch Entspannen des Autoklaven abgebrochen.

Nähere Angaben zum so erhaltenen Verfahrensprodukt sind der Tabelle zu entnehmen.

Beispiel 6

Herstellen des Trägerkatalysators (1)

Es erfolgt wie in Beispiel 5.

Polymerisation

0,13 g des Trägerkatalysators (1) sowie 0,05 g Triethylaluminium (2) (entsprechend einem Atomverhältnis Chrom im Trägerkatalysator zu Aluminium im Cokatalysator von 1 : 16), letzteres gelöst in 10 Gew.-Teilen Heptan, werden nacheinander in einen Rührautoklaven gegeben, der mit 400 g, entsprechend etwa 50 % seines Fassungsvermögens, n-Heptan beschickt ist. Sodann werden unter Rühren 5 bar Wasserstoff aufgepreßt. Die Polymerisation erfolgt bei 75°C und einem Gesamtdruck von 35 bar, der durch ständiges Nachpressen von Ethylen aufrechterhalten wird. Nach 2 Stunden wird die Polymerisation durch Entspannen des Autoklaven abgebrochen.

Zu den Daten des hierbei erhaltenen Verfahrensproduktes vgl. die nachstehende Tabelle.

Beispiel 7

Herstellen des Trägerkatalysators (1)

Es wird ausgegangen von einer Suspension aus 20 g Siliciumdioxid ($SiO_2$, Teilchendurchmesser 40 bis 150 µm, Porenvolumen 1,6 $cm^3$/g, Oberfläche 300 $m^2$/g), das 10 Stunden bei 600°C im Argonstrom ausgeheizt worden war, in 150 Gewichtsteilen Heptan. Diese Suspension wird mit einer Lösung von 0,49 g einer Chrom-Kohlenwasserstoff-Komplexverbindung, in deren Formel stehen R für Butadien und A für Cyclooctatetraen, in 50 ml Heptan vereinigt. Man rührt die erhaltene Suspension 4 Stunden lang bei 50°C und isoliert die feste Phase durch Filtration und Trocknen bei Raumtemperatur unter einem Druck von 5 mbar. Der Chrom-Gehalt des so erhaltenen Trägerkatalysators beträgt 0,7 Gew.-%, bezogen auf den Trägerstoff.

Polymerisation

0,35 g des Trägerkatalysators (1) sowie 0,05 Gew.-Teile Triethylaluminium (2) (entsprechend einem Atomverhältnis Chrom im Trägerkatalysator zu Aluminium im Cokatalysator von 1 : 9,3), letzteres gelöst in 10 ml Heptan werden nacheinander in einen Rührautoklaven gegeben, der mit 400 g, entsprechend etwa 50 % seines Volumens, n-Heptan beschickt ist. Sodann werden unter Rühren 2 bar Wasserstoff aufgepreßt. Die Polymerisation erfolgt bei 90°C und einem Gesamtdruck von 35 bar, der durch ständiges Nachpressen von Ethylen aufrechterhalten wird. Nach 2 Stunden wird die Polymerisation durch Entspannen des Autoklaven abgebrochen.

Auch zu dem dabei erhaltenen Produkt finden sich nähere Angaben in der Tabelle.

In dieser Tabelle steht PE für Polyethylen und TK für Trägerkatalysator.

| Beispiel | Ausbeute an PE [g] | g PE/g TK | g PE/g Cr | Schütt-gew. | Riesel-test[+] [g/sec] | HLMI (g/10 min] 21,6 Kp | MI [g/10 min] 2,16 Kp |
|---|---|---|---|---|---|---|---|
| 1 | 530 | 303 | 178 200 | 444 | 5,1 | 9,7 | 0,03 |
| 2 | 500 | 417 | 245 000 | 461 | 6,1 | 6,8 | 0,02 |
| 3 | 410 | 335 | 197 100 | 380 | 6,5 | 32,9 | 0,51 |
| 4 | 410 | 315 | 116 800 | 410 | 5,9 | 0,5 | - |
| 5 | 328 | 1210 | 114 200 | 360 | 4,3 | 9,7 | 0,1 |
| 6 | 330 | 2480 | 234 200 | 370 | 5,6 | 212 | 3,9 |
| 7 | 365 | 1040 | 149 000 | 420 | 5,7 | 14,5 | 0,2 |

+ gemessen nach ASTM D 1895-67 Methode A

Patentanspruch

Verfahren zum Herstellen von Ethylen-Homopolymerisaten sowie Ethylen-Copolymerisaten mit untergeordneten Mengen an einpolymerisierten $C_3$- bis $C_6$-$\alpha$-Monoolefinen durch Polymerisation des bzw. der Monomeren bei Temperaturen von 30 bis 200°C und Drücken von 0,1 bis 200 bar, mittels eines Trägerkatalysators (1), der auf einem anorganisch-oxidischen Trägerstoff (1.1) eine Chrom-Kohlenwasserstoff-Komplexverbindung (1.2) enthält, dadurch gekennzeichnet, daß man

(1) einen Trägerkatalysator einsetzt, der

(1.1) auf einem feinteiligen, porösen, anorganisch-oxidischen Trägerstoff, der einen Teilchendurchmesser von 1 bis 1.000 µm, ein Porenvolumen von 0,3 bis 3 $cm^3/g$ sowie eine Oberfläche von 100 bis 1.000 $m^2/g$ besitzt und die Formel $SiO_2 \cdot aAl_2O_3$ - worin a steht für eine Zahl im Bereich von 0 bis 2 - hat,

(1.2) eine Chrom-Kohlenwasserstoff-Komplexverbindung der Formel

$$RCrACrR,$$

worin stehen

R für einen 2n oder 2n + 1 Kohlenstoffatome sowie 1 bis n nicht-gehäufte Doppelbindungen - worin n steht für eine ganze Zahl von 2 bis 10 - aufweisenden Kohlenwasserstoff bzw. Kohlenwasserstoffrest ringförmiger und/oder offenkettiger Struktur,

Cr für Chrom und

A für Cyclooctatetraen oder einen zweiwertigen n-Octatetraenrest, wobei bis zu 8 Wasserstoffatome des Cyclooctatetraens bzw. n-Octatetraenrestes durch $C_1$- bis $C_4$-Alkylgruppen substituiert sein können,

enthält, sowie

(2) - gegebenenfalls - einen Cokatalysator mit einsetzt, der die Formel

$$X-\underset{\underset{Y}{|}}{Al}-R'$$

hat, worin stehen

X für Chlor, Wasserstoff, einen Rest R' oder einen Rest OR',

Y einen Rest R' oder einen Rest OR' und

R' für eine $C_1$- bis $C_{18}$-Alkylgruppe,

mit den Maßgaben, daß (i) der Trägerkatalysator (1) 0,01 bis 10 Gew.-% - gerechnet als Chrom und bezogen auf den Trägerstoff (1.1) - Komplexverbindung (1.2) enthält und (ii) - im gegebenen Fall - das Atomverhältnis Chrom im Trägerkatalysator (1) : Aluminium im Cokatalysator (2) bis zu 1 : 1000 beträgt.

0045855

Europäisches Patentamt

# EUROPÄISCHER RECHERCHENBERICHT

Nummer der Anmeldung
EP 81 10 5381

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 1 808 388 (UNION CARBIDE)<br>* Ansprüche 1-17 *<br>-- | 1 |
| D | GB - A - 1 128 128 (STUDIENGESELLSCHAFT KOHLE)<br>* Ansprüche 1,10,13,16; Seite 2, Zeilen 53-61 *<br>& DE - B - 1 593 535<br>-- | 1 |
| | DE - A - 2 336 227 (UNION CARBIDE)<br>* Ansprüche 1-10 *<br>---- | 1 |

KLASSIFIKATION DER ANMELDUNG (Int. Cl.[3])

C 08 F 10/02
4/78
4/62

RECHERCHIERTE SACHGEBIETE (Int. Cl.[3])

C 08 F 10/00-
10/14
110/00-
110/14
210/00-
210/16
4/62
4/78
4/74

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 19-11-1981 | WEBER |

0045855

Europäisches Patentamt

# EUROPÄISCHER RECHERCHENBERICHT

Nummer der Anmeldung
EP 81 10 5381

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| D | DE - A - 1 808 388 (UNION CARBIDE)<br>* Ansprüche 1-17 *<br>-- | 1 | C 08 F 10/02<br>4/78<br>4/62 |
| D | GB - A - 1 128 128 (STUDIENGESELLSCHAFT KOHLE)<br>* Ansprüche 1,10,13,16; Seite 2, Zeilen 53-61 *<br>& DE - B - 1 593 535<br>-- | 1 | |
| | DE - A - 2 336 227 (UNION CARBIDE)<br>* Ansprüche 1-10 *<br>---- | 1 | RECHERCHIERTE SACHGEBIETE (Int. Cl.3)<br>C 08 F 10/00-10/14<br>110/00-110/14<br>210/00-210/16<br>4/62<br>4/78<br>4/74 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 19-11-1981 | WEBER |